# EUROPEAN PATENT APPLICATION

(11) **EP 1 074 183 A2**
(43) Date of publication of application: **07.02.2001**
(21) Application number: 00116894.7
(22) Date of filing: 04.08.2000
(51) Int. Cl.: A23L 1/06, A23L 1/072, A23L 1/054, A23L 1/0532, A23L 1/0526

(54) **Jelly foods containing agar, xanthan and locust bean gum**

(30) Priority: 05.08.1999 JP 22244799
(71) Applicant: SNOW BRAND MILK PRODUCTS, CO., LTD., Sapporo-shi Hokkaido 065-0043 (JP)
(72) Inventor: Aoki, Kazumi, 696-1-203, Kita-akitsu, Saitama-ken (JP); Shiotani, Toshiaki, Tokyo (JP); Sasaki, Jun, Tokyo (JP)
(74) Representative: VOSSIUS & PARTNER

(57) **Abstract**

Jelly foods having sarcocarplike granules and texture are prepared by a process wherein 0.3-1.2 wt% agar, 0.01-0.6 wt% xanthan gum and 0.01-0.6 wt% locust bean gum are admixed as gelling agents at a ratio of xanthan gum to locust gum between 1 to 4 and 4 to 1, in an amount of agar exceeding the total amount of xanthan gum and locust bean gum, the admixture is heated to obtain a sol, after which this sol is cooled to make a gel, and the resulting gel is frozen and thawed.

## Description

The present invention relates to jelly foods products containing agar, xanthan gum and locust bean gum.
Jelly foods of the present invention have pulpy granules, a sarcocarplike texture of citrus fruits, and a flavor and texture markedly similar to mandarin orange; grapefruit or the like.

Jelly foods with added fruit flavorings to simulate the flesh of fruits are widely used as dessert since one can readily enjoy a taste and flavor resembling fruits. However, most of these jelly foods products are made by cooling solutions of a gelling agent to which fruit juice, flavorings or the like have been added to render a fruit flavor wherein the resulting structure and texture of the products are quite different from real fruits.

Accordingly, various attempts and proposals have been made to make jelly foods having pulpy granules and texture resembling fruit as much as possible. For example, a dessert jelly product having pulpy granules produced by freezing and thawing a sol in which fruits, dietary fibers and two or more kinds of gelling agents are mixed (Japanese Patent Laid-open, No. 1982-189653) and a method of producing a jelly food having a pulpy texture, in which a mixture comprising fermented milk, two or more kinds of gelling agents and a divalent metal ions are homogenized, then frozen and thawed (Japanese Patent Laid-open, No. 1988-3768) have been disclosed. These jelly foods products are soft and juicy and provide a texture resembling a peach or grape. Methods of producing jelly foods providing a sarcocarplike texture have been also proposed (Japanese Patent Laid-open, No. 1997-140339; Japanese Patent Laid-open, No. 1998-99031). In both methods, a gel, in which gellan gum is the primary component, is slowly frozen and thawed to obtain sarcocarplike texture and the product does not melt on heating. However, it is difficult to reuse gellan gum at the industrial level because it forms a thermoirreversible gel. Furthermore, the development of the sarcocarplike texture, such as the size and hardness, is susceptible to the freezing conditions, such as the freezing temperature and wind relocity, then the consistent production is difficult.

As described above, a variety of methods of producing jell foods products having a sarcocarplike texture by freezing and thawing have been proposed. However, the consistent production of the jelly food having sarcocarplike texture was difficult, because the development of the texture was greatly affected by the freezing conditions, and also the reuse of the thermoirreversible gel was difficult. Accordingly, the present invention intends to consistently produce a jelly foods product having sarcocarplike texture on an industrial scale. Namely, the objective of the present invention is to provide a jelly food which similar to the sarcocarp of citrus fruit.

Under the abovementioned circumstance, the present inventors have conducted intensive studies to provide jell foods products having sarcocarplike granules and texture. As a result, the present inventors found that jelly foods having a sarcocarplike granules and texture can be obtained by admixing agar, xanthan gum and locust bean gum as gelling agents, heating the admixture to obtain a sol, gelating the sol by cooling, then freezing and thawing the resulting gel. More specifically, the present invention relates to jelly foods products having sarcocarplike granules and texture, which can be obtained by a process wherein 0.3-1.2 wt% agar, 0.01-0.6 wt% xanthan gum and 0.01-0.6 wt% locust bean gum are admixed as gelling agents. A ratio of xanthan gum to locust bean gum is between 1 to 4 and 4 to 1, in an amount of agar exceeding the total amount of xanthan gum and locust bean gum. The admixture is heated to obtain a sol, after which this so is cooled to make gel, and the resulting gel is frozen and thawed. Any kind of agar can be used in jelly foods of the present invention in which agar, xanthan gum and locust bean gum are admixed. Namely, although various agar with different origin, class, or manufacturing method are commercially available, any agar with different chemical composition can be used to obtain jelly foods having sarcocarplike granules. A combination of different types of agar can also be used.
Figure 1 shows the gel strength with a different ratio of gelling agents (xanthan gum to locust bean gum).
Figure 2 shows the penetrating depth with a different ratio of gelling agents (xanthan gum to locust bean gum).
Figure 3 shows the gel strength with a different ratio of the gelling agent (agar).
Figure 4 shows the penetrating depth with a different ratio of the gelling agent (agar).
Figure 5 shows the size of sarcocarplike granules with a different ratio of gelling agents (xanthan gum and locust bean gum).
Figure 6 shows the size of sarcocarplike granules with a different ratio of the gelling agent (agar).

The present invention will be explained in detail as follows.

In the production of jelly foods of the present invention, three kinds of gelling agents, i.e., agar, xanthan gum and locust bean gum, are used. The final concentrations of the gelling agents are 0.3-1.2 wt% agar, 0.01-0.6% wt% xanthan gum and 0.01-0.6 wt% locust bean gum at a ratio of xanthan gum to locust bean gum between 1 to 4 and 4 to 1, in an amount of agar exceeding the total amount of xanthan gum and locust bean gum. Agar to be used in the present invention can be produced *Gracilaria verrucosa, Gelidium amansil*, *Pterocladia capillacea* or the like from as a raw material. Different kinds of agar can be used. The agar concentration is preferably about 0.3-1.2% by weight. If the agar concentration is less than 0.3 wt%, a large amount of water is released after thawing, which makes a jelly spongy. On the other hand, if the agar concentration exceeds 1.2 wt%, very little water is released after thawing and of the resulting jelly becomes unfavorably dry texture.
It is known that xanthan gum or locust bean gum does not make a gel, but they form gel if with other gelling agents, without freeze-texturing. As mentioned above, in the present invention, jelly foods having sarcocarplike granules and texture simulating various citrus fruits can be produced by admixing agar with xanthan gum and locust bean gum at a certain ratio.

The ratio of xanthan gum to locust bean gum ranges between 1 to 4 and 4 to 1, as mentioned above, but preferably between 2 to 3 and 3 to 2, most preferably 1 to 1. When the ratio is 1 to 1, namely, equal amounts of xanthan gum and locust bean gum are mixed together, a most marked synergistic effect and more marked sarcocarplike granules develops. As the ratio of either xanthan gum or locust bean gum increases, the synergistic effect decreases, and the strength of the gel is reduced and the sarcocarplike granules become smaller in the resulting jelly foods.
It is generally known that agar forms a hard and brittle gel while a mixture of xanthan gum and locust bean gum forms a elastic gel. Even in the present invention, the jelly foods have hard and brittle sarcocarplike texture when the amount of agar is significantly greater than the total amount of xanthan gum and locust bean gum while the texture of the jelly foods becomes soft and elastic as the total amount of xanthan gum and locust bean gum increases.

Furthermore, when the total amount of xanthan gum and locust bean gum exceeds the amount of agar, the dominant xanthan gum and locust bean gum induce virtually no freeze-texturing, which makes the jelly foods have a smooth texture instead of the sarcocarplike granules and texture for which the present invention aims. Accordingly, it is important that the total amount of xanthan gum and locust bean gum does not exceed the amount of agar.

As described above, in the present invention, three kinds of gelling agents, agar, xanthan gum and locust bean gum are mixed, water is added, the resulting admixture is stirred, heated thoroughly dissolve the gelling agents to prepare a sol. Fruit juices, flavorings or seasonings such as sweeteners and agents to control the acid taste can be added to this sol to upgrade the palatability of the jelly foods. Artificially prepared fruit juices and flavorings can be used appropriately for designing the taste of a jelly food. Organic acids such as citric acid, lactic acid and malic acid are preferably used as agents to control the acid taste in the present invention, or natural fruit juices can also be used. Furthermore, sweetness can be added by admixing sugars such as sucrose, fructose and starch syrup, or artificial sweeteners. Also, coloring agents can be added to further simulate the natural pulp.

The sol thus prepared is filled into appropriate containers, and cooled o make a gel, and allowed to stand at about -10C to -40C to freeze to the center of the gel, then thawed at about 0C to 40C to obtain jelly foods of the present invention having sarcocarplike granules and texture.

In the present invention, jelly foods having the abovementioned characteristics are prepared by admixing galling agents, agar, xanthan gum and locust bean gum, in a specified ratio, the texture of the sarcocarplike granules, such as texture, size, hardness and elasticity, can be controlled by changing the ratio within the abovementioned specified range. The texture similar to the sarcocarplike texture of various citrus fruits such as orange and grapefruit can be produced.

In the following test examples, jelly foods were prepared by admixing agar, xanthan gum and locust bean gum in different amounts and ratios, and their gel strength, elasticity and the size of sarcocarplike granules were measured.

### [Test 1]

### (1) Preparation of samples

Nine gel samples were prepared containing a total of 0.4 wt% xanthan gum and locust bean gum in different ratios plus 0.5 wt% agar as shown in Table 1.

Further, 7 gel samples were prepared containing a total amount of 0.9 wt% in which an equal amounts of xanthan gum and locust bean gum, and agar in different ratios as shown in Table 2.

Water was added to these gelling agent mixtures and the resulting admixtures were stirred and heated to dissolve the gelling agents to obtain sols. After the addition of 0.3 wt% citric acid and 0.2 wt% sodium citrate, 100 ml portions of the sols were filled into containers (70 mm diameter × 35 mm height) and allowed to stand in a freezer at -15C for 10 hours for freezing. The resultant frozen gels were then allowed to stand at 20C for 5 hours for thawing. Thus, 16 gel samples were prepared.

**[Table 1]**

| | Xanthan gum | Locust bean gum | Agar |
|---|---|---|---|
| (a) | 0 | 0.40 | 0.5 |
| (b) | 0.04 | 0.36 | 0.5 |
| (c) | 0.08 | 0.32 | 0.5 |
| (d) | 0.10 | 0.30 | 0.5 |
| (e) | 0.20 | 0.20 | 0.5 |
| (f) | 0.30 | 0.10 | 0.5 |
| (g) | 0.32 | 0.08 | 0.5 |
| (h) | 0.36 | 0.04 | 0.5 |
| (i) | 0.40 | 0 | 0.5 |
| (Figures in wt%) | | | |

**[Table 2]**

| | Xanthan gum | Locust bean gum | Agar |
|---|---|---|---|
| (j) | 0 | 0 | 0.90 |
| (k) | 0.09 | 0.09 | 0.72 |
| (l) | 0.18 | 0.18 | 0.54 |
| (m) | 0.225 | 0.225 | 0.45 |
| (n) | 0.27 | 0.27 | 0.36 |
| (o) | 0.36 | 0.36 | 0.18 |
| (p) | 0.45 | 0.45 | 0 |
| (Figures in wt%) | | | |

### (2) Measurements of gel strength and elasticity

Gel strength of the samples prepared as described above was measured using a texture analyzer (Stable Micro Systems), a plunger having a 2 mm diameter was penetrated into the sample at 1 mm/s and the pressing force at the point of rupture of the gel was measured. Also, the depth of plunger penetration was measured. Generally, the further the plunger penetrates, the more elastic the gel is. Depth of penetration was used as an index of elasticity of the gel.

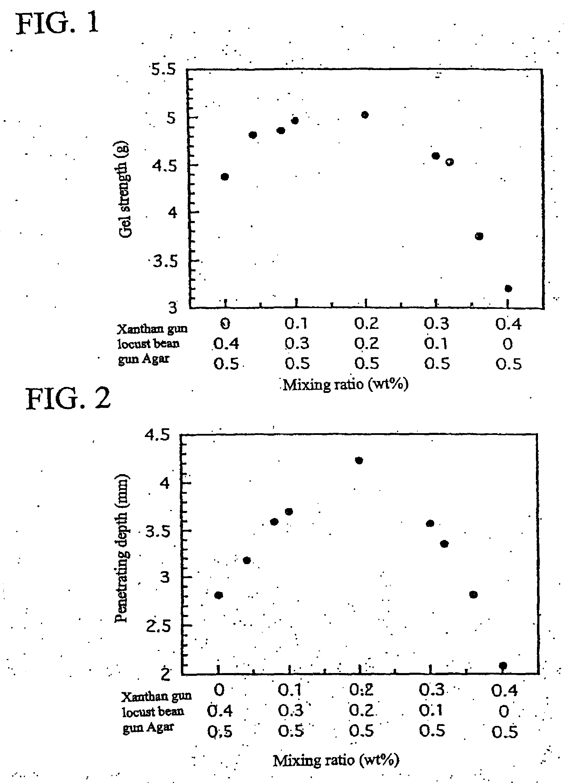

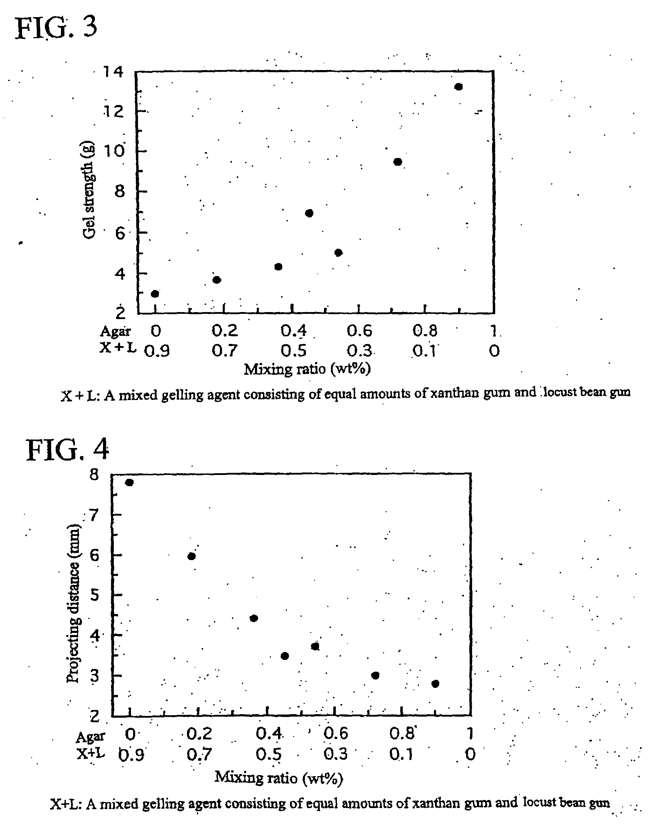

Results of the measurement of the gel strength and depth of penetration are shown in Figure 1 and Figure 2 for gel samples (a) to (i) in Table 1, and in Figure 3 and Figure 4 for gel samples (j) to (p) in Table 2.
As shown in Figure 1 and Figure 2, the gel strength and elasticity of jelly foods increased as the amount of xanthan gum and locust bean gum approached equality. This shows marked synergistic effect of xanthan gum and locust bean gum. As shown in Figure 3 and Figure 4, in which agar was added in different ratios to a mixture of equal amounts of xanthan gum and locust bean gum, as the ratio of agar increased, the gel strength increased but the elasticity decreased. This shows that the properties of agar hard and brittle markedly appeared with high ratios of agar, and that the soft and elastic properties of a gel formed with equal amounts of xanthan gum and locust bean gum markedly appeared with low ratios of agar.

These figures for gel strength and elasticity correspond to the texture of the jelly foods. Accordingly, these results show that hardness and elasticity of jelly foods can be easily controlled by changing the ratio of xanthan gum plus locust bean gum in accordance with the desired taste.

### (3) Observation of sarcocarplike granules

Gel samples prepared as described above were observed for the size of the sarcocarplike granules. A portion of a gel sample (10 g) was filled into a 200-ml beaker, 100 g of water was added, and the admixture was stirred for 30 seconds at 600 rpm. Fragments of gel samples thus obtained were placed in a petri dish (made of transparent plastic), observed for the size of granules, and photographed using a digital camera.

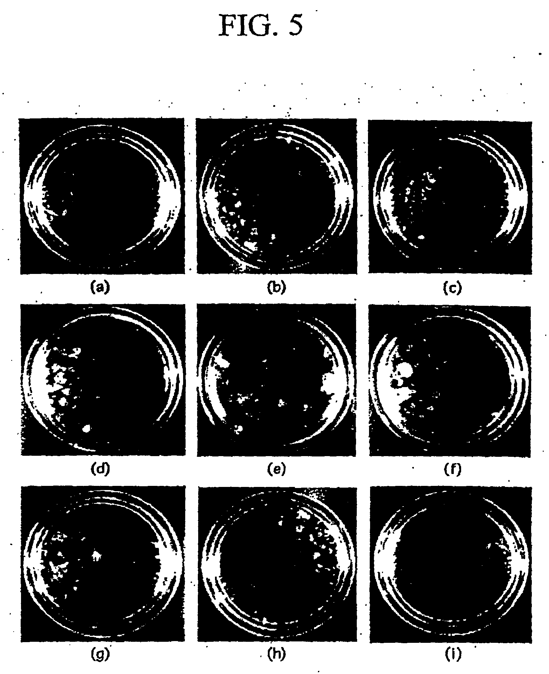

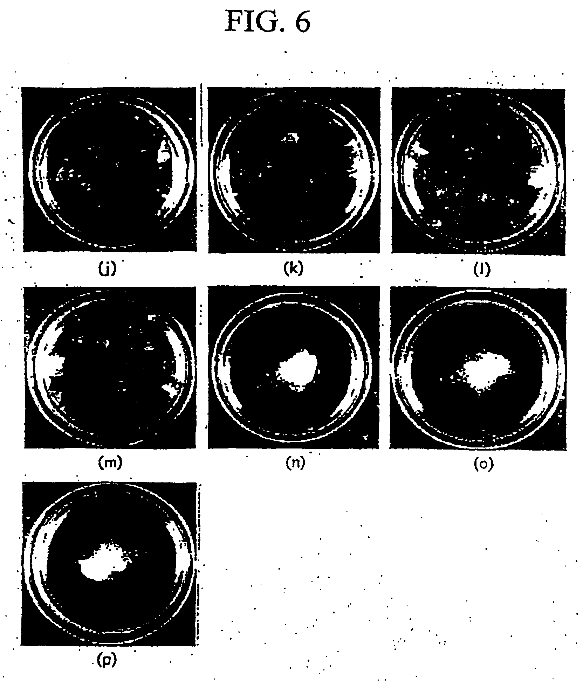

Digital camera photographs are shown in Figure 5 for gel samples (a) to (i) in Table 1, and in Figure 6 for gel samples (j) to (p) in Table 2. Figure 5 shows that when the ratio of xanthan gum to locust bean gum was not within the range between 1 to 4 and 4 to 1, extremely fine granules with grated apple-like texture were formed. When the ratio of xanthan gum to locust bean gum was within the range between 1 to 4 and 4 to 1, sarcocarplike granules were formed. The largest sarcocarplike granules were formed when equal amounts of xanthan gum and locust bean gum were mixed. The size of the granules became smaller as the ratio of xanthan gum to locust gum became larger or smaller.

These results showed that the size of the sarcocarplike granules could be controlled by changing the ratio of xanthan gum to locust bean gum within a certain range. Namely, jelly foods having more pulpy texture in which the sarcocarplike granules are of a size from as small as that of mandarin oranges to as large as that of grapefruits can be easily prepared by changing the ratio of the gelling agents.

Furthermore, Figure 6, in which different amounts of agar were added to the gelling agent mixture of equal amounts of xanthan gum and locust bean gum, shows that the sarcocarplike granules became softer when the ratio of agar was reduced, and a jelly food having sarcocarplike granules, the object of the present invention, could not be obtained when the total amount of xanthan gum and locust bean gum exceeded that of agar. This is probably because the property that a gel containing xanthan gum and locust bean gum is elastic and more tolerant to freeze damage is emphasized. When the amount of agar exceeded the total amount of xanthan gum and locust bean gum in the gelling agent mixture, sarcocarplike granules of a similar size were obtained regardless of the admixing ratio. Thus, it was revealed that the texture of the sarcocarplike granules, such as hardness and elasticity, could be easily controlled by changing the ratio of agar, xanthan gum and locust bean gum.

The present invention will be explained more in detail by the following examples.

### [Example 1]

A jelly food having mandarin-orange-like texture was prepared from ingredients as shown in Table 3. Namely, a liquid sugar, agar, xanthan gum and locust bean gum were dispersed in water in the ratio shown in Table 3 and dissolved with heating to obtain a sol. Sodium citrate, citric acid, fruit juice and a flavoring were added to this sol and the admixture was stirred to obtain a jelly mix. A portion of this mix (110 g) was filled into a container and the container was sealed with an aluminum sheet. The jelly mix in the container was stored in a freezer at -20C for about 5 hours to freeze, and then thawed in a refrigerator at 10C to obtain a jelly food.
This jelly food had a orange-like taste with appropriate sarcocarplike texture.

**[Table 3]**

| | |
|---|---|
| Agar | 0.6 (wt%) |
| Xanthan bean gum | 0.15 |
| Locust gum | 0.2 |
| Liquid sugar | 18.0 |
| 1/5 concentrated mandarin orange juice | 6.0 |
| Sodium citrate | 0.2 |
| Citric acid | 0.3 |
| Flavoring | 0.25 |
| Water | 74.3 |
| Total | 100.00 |

### [Example 2]

A jelly food having grapefruit-like texture was prepared from ingredients as shown in Table 4. Namely, a liquid sugar, agar, xanthan gum and locust bean gum were dispersed in water in the ratio shown in Table 4 and dissolved with heating to obtain a sol. Sodium citrate, citric acid, fruit juice and a flavoring were added to this sol and the admixture was stirred to obtain a jelly food mix. A portion of this jelly mix (90 g) was filled into a container and the container was sealed with an aluminum sheet. The jelly mix filled into the container was stored in a freezer at -10C for about 5 hours to freeze, and then thawed at room temperature to obtain a jelly food.

This jelly food looked like a homogeneous jelly food, and a juicy taste and had a sarcocarplike texture of slightly like a grapefruit.

**[Table 4]**

| | |
|---|---|
| Agar | 0.3 (wt%) |
| Xanthan gum | 0.15 |
| Locust bean gum | 0.15 |
| Liquid sugar | 17.6 |
| 1/5 concentrated grapefruit juice | 6.0 |
| Sodium citrate | 0.1 |
| Citric acid | 0.3 |
| Flavoring | 0.2 |
| Water | 75.2 |
| Total | 100.00 |

### [Effectiveness of the Invention]

According to the present invention, jelly foods having pulpy sarcocarplike texture can be obtained by mixing 3 kinds of gelling agents, i.e., agar, xanthan gum and locust bean gum in specified amounts and ratios, by gelling gelation and by freezing and thawing for texturing. Furthermore, according to the present invention, sarcocarplike texture further similar to various citrus fruits can be provided since the texture of sarcocarplike granules such as size, and hardness and elasticity, can be easily controlled by changing the ratio of the abovementioned 3 kinds of gelling agents within a specified range.

## Claims

1. A jelly food containing 0.3-1.2 wt% agar, 0.01-0.6 wt% xanthan gum and 0.01-0.6 wt% locust bean gum as gelling agents, characterized by having sarcocarplike granules and texture obtained by a process wherein the gelling agents are admixed at a ratio of xanthan gum to locust bean gum between 1 to 4 and 4 to 1 in an amount of agar exceeding a total amount of xanthan gum and locust bean gum, the admixture is heated to obtain a sol, after which this sol is cooled to make a gel, and the resulting gel is frozen and thawed.

2. A method of producing a jelly food having sarcocarplike granules and texture and containing 0.3-1.2 wt% agar, 0.01-0.6 wt% xanthan gum and 0.01-0.6 wt% locust bean gum as gelling agents, said method comprising the steps of: (i) mixing gelling agents at a ratio of xanthan gum to locust bean gum between 1 to 4 and 4 to 1, in an amount of agar exceeding a total amount of xanthan gum and locust bean gum.(ii) beating the mixture to obtain a sol, (iii) cooling the sol to make a gel, (iv) freezing the resulting gel, and (v) thawing the frozen gel.
